# EUROPÄISCHE PATENTANMELDUNG

(11) **EP 0 867 354 A2**
(43) Veröffentlichungstag der Anmeldung: **30.09.1998**
(21) Anmeldenummer: 98103983.7
(22) Anmeldetag: 06.03.1998
(51) Int. Cl.: B62B 19/04

(54) **Transportgerät mit Skiern oder Rädern für Kleinstkinder**

(30) Priorität: 24.03.1997 DE 19712217
(71) Anmelder: Urbanek, Angelina, 73529 Schwäbisch Gmünd (DE); Albert, Hubert, 73529 Schwäbisch Gmünd (DE)
(72) Erfinder: Urbanek, Angelina, 73529 Schwäbisch Gmünd (DE); Albert, Hubert, 73529 Schwäbisch Gmünd (DE)
(74) Vertreter: Nockher, Gerhard, Dipl.-Ing.

(57) **Zusammenfassung**

Ein Transportgerät für Kleinstkinder, das wahlweise mittels Skiern auf Schnee und mittels Rädern auf schneefreiem Untergrund betreibbar ist, wobei an zwei in Fahrtrichtung hintereinander liegenden Achsen wahlweise die Skier pendelnd gelagert oder die Räder drehbar gelagert an einem Unterbau anbringbar sind, wobei auf dem Unterbau eine Aufnahme für ein Kleinstkind vorgesehen ist, und wobei auf mindestens einer der Achsen quer zur Fahrtrichtung beabstandet zwei Skier oder Räder vorgesehen sind, soll leichter transportierbar, sicherer und universeller verwendbar gemacht werden.

Dies geschieht dadurch, daß der Unterbau als flacher Rahmen ausgebildet und auf dem Rahmen eine Sicherheitssitzschale angeordnet ist.

## Beschreibung

Die Erfindung bezieht sich auf ein Transportgerät für Kleinstkinder, das wahlweise mittels Skiern auf Schnee und mittels Rädern auf schneefreiem Untergrund betreibbar ist, wobei an zwei in Fahrtrichtung hintereinander liegenden Achsen wahlweise die Skier pendelnd gelagert oder die Räder drehbar gelagert an einem Unterbau anbringbar sind, wobei auf dem Unterbau eine Aufnahme für ein Kleinstkind vorgesehen ist und wobei auf mindestens einer der Achsen quer zur Fahrtrichtung beabstandet zwei Skier oder Räder vorgesehen sind.

Derartige Transportgeräte sind mit einem einem Kinderwagen ähnelnden Aufbau (DE 35 05 187 A1, DE 38 43 812 A1) bekannt. Diese Transportgeräte weisen jeweils als Unterbau ein verhältnismäßig hohes Gestell auf, auf dem ein Kinderwagenaufsatz, der auch abnehmbar sein kann, angeordnet ist. Für einen Betrieb auf Schnee sind Skier vorgesehen, die sich über die ganze Länge des Gestells erstrecken oder einzeln im Bereich jeder Achse vorgesehen sind.

Nachteilig an diesen bekannten Transportgeräten ist, daß das hohe Gestell schlecht, z.B. in einem PKW, transportierbar ist, und daß wegen des hoch liegenden Schwerpunktes die Kippsicherheit gering ist.

Es ist Aufgabe der Erfindung ein solches Transportgerät leichter transportierbar, sicherer und universeller verwendbar zu machen.

Diese Aufgabe ist bei einem Transportgerät der eingangs genannten Art dadurch gelöst, daß der Unterbau als flacher Rahmen ausgebildet und auf dem Rahmen eine Sicherheitssitzschale angeordnet ist.

Ein solches Transportgerät ist, z.B. in einem PKW, leicht zu transportieren, insbesondere wenn dazu die Skier und Räder abgenommen werden. Der tief liegende Schwerpunkt verhindert ein Kippen mit großer Sicherheit. Die Sicherheitssitzschale ermöglicht eine sichere und für das Kleinstkind angenehme Unterbringung desselben.

Vorteilhafterweise kann die Sicherheitssitzschale lösbar auf dem Rahmen befestigt sein, damit die Sicherheitssitzschale mit dem darin befindlichen Kleinstkind losgelöst von dem Transportgerät beispielsweise in einen PKW oder eine Wohnung gebracht werden kann.

Die Sicherheitssitzschale kann in beiden Richtungen auf dem Rahmen befestigbar sein, um je nach Fahrtrichtung und Wetterverhältnissen die günstigste Lage des Kleinstkindes auf dem Transportgerät zu ermöglichen.

Zweckmäßigerweise kann die Sicherheitssitzschale mittels einer an dem Rahmen angebrachten Klappe befestigbar sein, wodurch ein schnelles und einfaches Befestigen und Lösen der Sicherheitssitzschale ermöglicht wird.

Damit das Transportgerät auch für größere Kinder verwendbar wird, kann die Sicherheitssitzschale durch einen Kindersitz ersetzbar sein.

Zur Erhöhung der Sicherheit kann die Sicherheitssitzschale oder der Kindersitz mit Sicherheitsgurten versehen sein.

Um eine verbesserte Kurvengängigkeit des Transportgerätes zu erreichen, ist eine Ausführung zweckmäßig, bei der in einem Endbereich des Rahmens zwei Skier oder Räder quer zur Fahrtrichtung beabstandet und im anderen Endbereich des Rahmens ein einzelner Ski oder ein einzelnes Rad um eine senkrechte Achse schwenkbar angebracht sind. Der schwenkbare, einzelne Ski oder das schwenkbare, einzelne Rad kann je nach Fahrtrichtung vorlaufend oder nachlaufend sein.

Eine vorteilhafte weitere Ausgestaltung dieses Transportgerätes besteht darin, daß der einzelne Ski oder das einzelne Rad in einer um die senkrechte Achse schwenkbaren Halterung anbringbar ist, die über den zugeordneten Endbereich des Rahmens hinausragt und dort eine Aufnahme für ein Schub- und Zugglied aufweist. Damit kann die verbesserte Kurvengängigkeit durch Lenken mittels des Schub- oder Zuggliedes ausgenutzt werden.

Die Schwenkbarkeit der Halterung kann dazu ausgenutzt werden, daß in dem Rahmen im Bereich der Halterung ein Arretierungsbolzen vorgesehen ist, der in eine Bohrung in der Halterung einsteckbar ist. Dadurch kann der Ski oder das Rad quer zur Fahrtrichtung gestellt und in dieser Stellung arretiert werden, wodurch die Gefahr verringert wird, daß das Transportgerät sich unbeabsichtigt in Bewegung setzt.

Vorteilhafterweise ist das Schub- oder Zugglied zur Verbesserung der Lenkbarkeit als um eine horizontale Achse in der Aufnahme schwenkbare Stange ausgebildet ist. Die Schwenkbarkeit der Stange und deren mögliche teleskopartige Längenveränderlichkeit dienen auch zur Anpassung an die Größe der das Transportgerät betreibenden Person. Ein an dem von der Aufnahme abgewandten Ende der Stange um deren Achse drehbarer Griff kann der Person das Schieben oder Ziehen des Transportgerätes erleichtern. Die teleskopartige Längenveränderlichkeit der Stange vereinfacht auch den Transport des Transportgerätes, z. B. in einem PKW.

Soweit zwei quer zur Fahrtrichtung voneinander beabstandete Skier oder Räder anzubringen sind, kann die zugeordnete Achse durch zwei quer zur Fahrtrichtung voneinander beabstandete Steckachsen gebildet sein. Dadurch wird die Gefahr des Aufsitzens oder Anstoßens der Achse(n) auf / an zwischen den Spuren befindlichen Hindernissen ausgeschlossen.

Um den Aufbau oder den Umbau des Transportgerätes oder dessen Abbau zwecks Transportes, z.B. in einem PKW, zu beschleunigen, können die Skier und die Räder mittels Schnellverschlüssen an den Achsen anbringbar sein.

An dem von dem Zug- und Schubglied abgewandten Ende der Skier können an diesen Zusatzrollen gelagert sein. Diese dienen der Überwindung schneefreier Abschnitte, beispielsweise der Überquerung geräumter Straßen, dadurch, daß das Transportgerät an einem Ende mittels des Zug- und Schubgliedes angehoben wird, während sich das andere Ende des Transportgerätes auf den Zusatzrollen abstützt.

An dem Transportgerät können Skier verschiedener Form eingesetzt werden. Einerseits kann jeder Ski an seinen beiden Enden hochgebogen sein.Damit ist das Transportgerät in beiden Fahrtrichtungen ohne Umbau betreibbar. Andererseits kann jeder Ski an nur einem seiner Enden hochgebogen sein. Zur Anpassung an die Fahrtrichtung müssen die Skier dann wahlweise mit den hochgebogenen Enden in die eine oder die andere Richtung weisend angebracht werden.

In der Zeichnung ist ein Ausführungsbeispiel für ein Transportgerät nach der Erfindung dargestellt, und zwar zeigen
- Fig. 1 bis 3: den Zustand für Betrieb auf Schnee,
- Fig. 4 bis 6: den Zustand für Betrieb auf schneefreiem Untergrund,

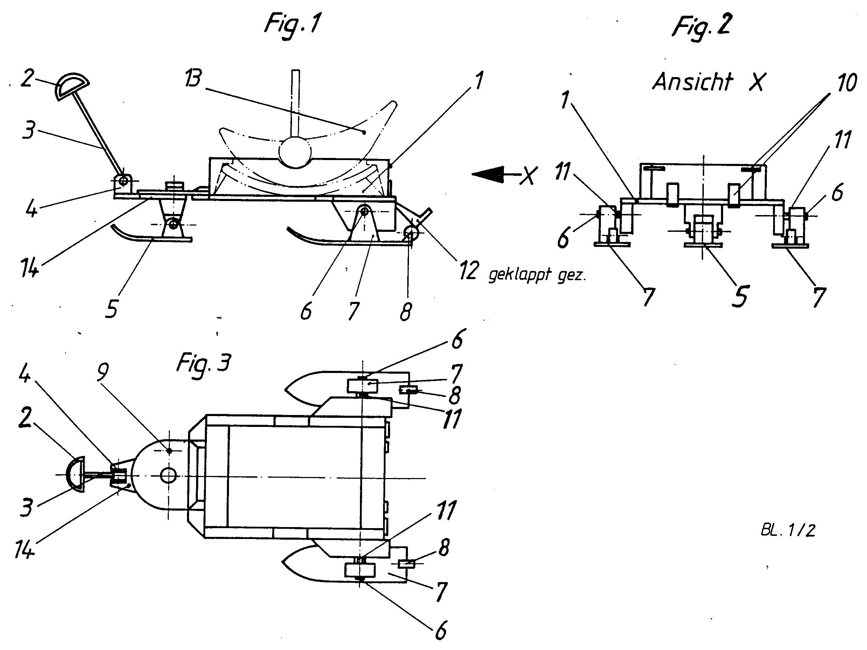

- Fig. 1: eine Seitenansicht,
- Fig. 2: eine Ansicht auf Fig. 1 in Richtung des Pfeiles X,
- Fig. 3: eine Draufsicht auf Fig. 1,

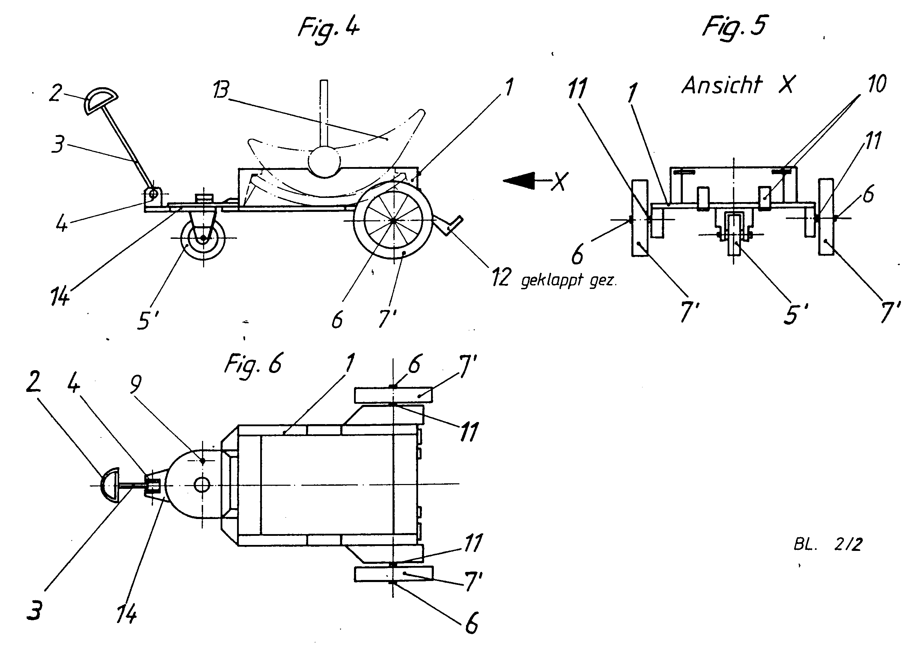

- Fig. 4: eine Seitenansicht,
- Fig. 5: eine Ansicht auf Fig. 3 in Richtung des Pfeiles X,
- Fig. 6: eine Draufsicht auf Fig. 4.

Auf einem Rahmen 1 ist eine Sicherheitssitzschale 13 mittels einer schwenkbaren Klappe 12 befestigt, die mit Scharnier 10 und Riegel 10 zu schließen ist. An einem Ende des Rahmens 1 ist unterseitig an diesem eine um eine senkrechte Achse schwenkbare Halterung 14 angeordnet, die über das Ende des Rahmens 1 übersteht.

In diesem Bereich ist oben auf der Halterung 14 eine Aufnahme 4 befestigt, in der um eine horizontale Achse schwenkbar ein Schub- und Zugglied 3 in der Form einer Stange gelagert ist. In dem von der Aufnahme 4 abgewandten Ende des Schub- und Zuggliedes 3 ist ein um dessen Achse drehbarer Griff 2 gelagert.

Durch einen im Bereich der Halterung 14 an dem Rahmen 1 angebrachten Arretierungsbolzen 9, der in eine Bohrung in der Halterung 14 einsteckbar ist, kann die Halterung 14 gegenüber dem Rahmen 1 festgelegt werden.

An der Unterseite des Rahmens 1 sind in dessen einem Endbereich quer zur Fahrtrichtung voneinander beabstandet zwei Steckachsen 11 vorgesehen. An der Unterseite der Halterung 14 ist mit dieser um die senkrechte Achse schwenkbar eine Achse angebracht.

Bei dem Zustand gemäß Figuren 1 bis 3 sind an den beiden Steckachsen 11 Skier 7 gelagert und durch Schnellverschlüsse 6 gesichert. In diesen Skiern 7 sind Zusatzrollen 8 gelagert. Auf der Achse an der Halterung 14 ist ein einzelner Ski 5 gelagert.

Bei dem Zustand gemäß Figuren 4 bis 6 sind an den beiden Steckachsen 11 Räder 7' gelagert und durch Schnellverschlüsse 6 gesichert. Auf der Achse an der Halterung 14 ist ein einzelnes Rad 5' gelagert.

## Patentansprüche

1. Transportgerät für Kleinstkinder, das wahlweise mittels Skiern auf Schnee und mittels Rädern auf schneefreiem Untergrund betreibbar ist, wobei an zwei in Fahrtrichtung hintereinander liegenden Achsen wahlweise die Skier pendelnd gelagert oder die Räder drehbar gelagert an einem Unterbau anbringbar sind, wobei auf dem Unterbau eine Aufnahme für ein Kleinstkind vorgesehen ist, und wobei auf mindestens einer der Achsen quer zur Fahrtrichtung beabstandet zwei Skier oder Räder vorgesehen sind, dadurch gekennzeichnet, daß der Unterbau als flacher Rahmen (1) ausgebildet und auf dem Rahmen (1) eine Sicherheitssitzschale (13) angeordnet ist.

2. Transportgerät nach Anspruch 1, dadurch gekennzeichnet, daß die Sicherheitssitzschale (13) lösbar und wahlweise in beiden Richtungen auf dem Rahmen (1) mittels einer an dem Rahmen (1) angebrachten Klappe (12) befestigbar ist.

3. Transportgerät nach Anspruch 1 oder 2, dadurch gekennzeichnet, daß die Sicherheitssitzschale (13) durch einen Kindersitz ersetzbar ist, wobei die Sicherheitssitzschale (13) oder der Kindersitz mit Sicherheitsgurten versehen ist.

4. Transportgerät nach einem der vorhergehenden Ansprüche, dadurch gekennzeichnet, daß in einem Endbereich des Rahmens (1) zwei Skier (7) oder Räder (7') quer zur Fahrtrichtung beabstandet und im anderen Endbereich des Rahmens (1) ein einzelner Ski (5) oder ein einzelnes Rad (5') um eine senkrechte Achse schwenkbar angebracht sind.

5. Transportgerät nach Anspruch 4, dadurch gekennzeichnet, daß der einzelne Ski (5) oder das einzelne Rad (5') in einer um die senkrechte Achse schwenkbaren Halterung (14) anbringbar ist, die über den zugeordneten Endbereich des Rahmens (1) hinausragt und dort eine Aufnahme (4) für ein Schub- und Zugglied (3) aufweist, das als um eine horizontale Achse in der Aufnahme (4) schwenkbare, teleskopartig längenveränderliche Stange ausgebildet ist, an der an dem von der Aufnahme (4) abgewandten Ende ein um die Achse der Stange drehbarer Griff (2) vorgesehen ist.

6. Transportgerät nach Anspruch 5, dadurch gekennzeichnet, daß in dem Rahmen (1) im Bereich der Halterung (14) ein Arretierungsbolzen (9) vorgesehen ist, der in eine Bohrung in der Halterung (14) einsteckbar ist.

7. Transportgerät nach einem der vorhergehenden Ansprüche, dadurch gekennzeichnet, daß die Achse(n) durch (je) zwei quer zur Fahrtrichtung voneinander beabstandete Steckachsen (11) gebildet ist / sind.

8. Transportgerät nach einem der vorhergehenden Ansprüche, dadurch gekennzeichnet, daß die Skier (5,7) und die Räder (5',7') mittels Schnellverschlüssen (6) an den Achsen anbringbar sind.

9. Transportgerät nach einem der Ansprüche 5 bis 8, dadurch gekennzeichnet, daß an den von dem Zug- und Schubglied (3) abgewandten Enden der Skier (7) an diesen Zusatzrollen (8) gelagert sind.

10. Transportgerät nach einem der Ansprüche 1 bis 9, dadurch gekennzeichnet, daß jeder Ski (5,7) an mindestens einem seiner Enden hochgebogen ist, und die Skier (5,7) wahlweise mit hochgebogenen Enden in die eine oder die andere Richtung weisend anbringbar sind.
